# EUROPEAN PATENT APPLICATION

(11) **EP 3 179 470 A1**
(43) Date of publication of application: **14.06.2017**
(21) Application number: 16460055.3
(22) Date of filing: 25.08.2016
(51) Int. Cl.: G09F 21/04, G09F 23/06, G09F 27/00, B62B 3/14, H02J 7/00

(54) **PORTABLE MANAGEMENT SYSTEM FOR MULTIMEDIA DISPLAYS**

(30) Priority: 31.08.2015 PL 41375315
(71) Applicant: Solution SCA Sp. z o.o., 05-082 Blizne Jasinskiego (PL)
(72) Inventor: URBAN, Piotr, 01-493 Warszawa (PL)

(57) **Abstract**

A portable management system for multimedia displays mounted on the shopping trolleys comprising a portable charging station preferably with wheels, further comprising a charger, a data transmission router, preferably GSM modem, which plugged into the mains socket and connected to the portable multimedia display via a portable charging strip, charges the batteries of the multimedia display and transmits data and multimedia content to said multimedia display.

## Description

The invention relates to a portable management system for multimedia displays mounted on the shopping trolleys comprising a portable charging station, charging strips and multimedia displays preferably mounted on the shopping trolleys.

The system applications include retail networks using shopping trolleys in stores/markets/hypermarkets. The shopping trolleys are fitted with multimedia displays for displaying information and advertisements. Within opening hours, shopping trolleys are used by the customers and moved around the store.

The maintenance of the displays mounted on the shopping trolleys requires a specific extended infrastructure in the store/market/hypermarket for charging the display batteries and data transmission, preferably multimedia content to multiple displays mounted on the shopping trolleys.

The portable management system for multimedia displays allows simultaneous charging of multiple displays, preferably mounted on the shopping trolleys and can be used anywhere within the store/market/hypermarket and does not interfere with store infrastructure and IT systems and allows easy handling of the entire system or its components within the store and between different stores.

Since the 1980s, many companies have tried to develop a concept of multimedia displays mounted on the shopping trolleys. One of the main issues is the auxiliary infrastructure, such as a charger or a data transmission system that ensure efficient operation of the displays mounted on the shopping trolleys.

Any patent applications and attempts aim to provide a permanent in-store infrastructure supplying the displays mounted on the shopping trolleys, connected to the store infrastructure and using special charging stations, docking stations etc. The solutions require many arrangements, building permissions, electrical, technical and other legal approvals, as well as a charging location within the store. The solution is used by Media Cart Holdings (patent no. US7660747) and requires a charging station, wherein the charging begins when the wheels of the shopping trolley with the display mounted come in contact with the charging station rails. A device is known from the prior art, Chinese patent no. CN101572043, comprising a multimedia display mounted on the shopping trolley, wherein the batteries are charged or replaced each time using a method used in mobile phones. Each display features a charging port for connecting a charger, similar to the phone charger and connected to the mains socket.

The invention relates to a portable management system for multimedia displays mounted on the shopping trolleys used in stores/markets/hypermarkets comprising a portable charging station, charging strips and displays preferably mounted on the shopping trolleys.

None of the system components are permanently connected to the store infrastructure. It allows system implementation, preferably in the store/market/supermarket without any building permissions or other legal approvals, at any time.

System commissioning in the store/market/hypermarket does not require installation or calibration.

All system components are modular, interchangeable and replaceable.

### The system components include:

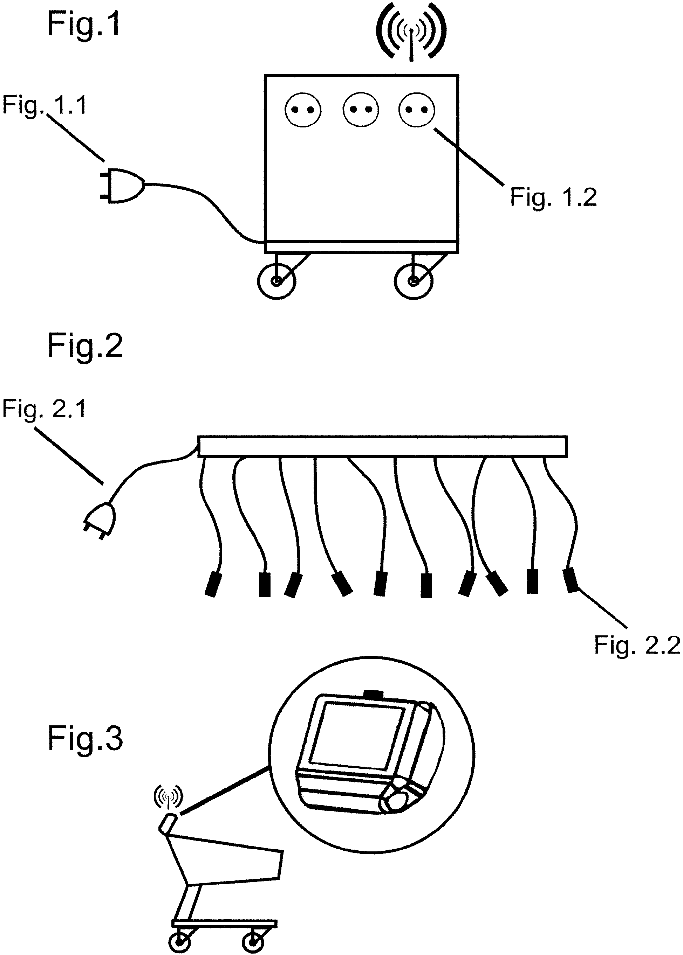

**I. Portable charging station** (Fig. 1) - is a device, preferably packaged in a single integrated enclosure for charging 1 to 1000 displays and data transfer, comprising a multimedia display charger and a data transmission device, preferably a router connected to the external server via GSM, Wi-Fi or otherwise. The station comprises: a power supply cable (Fig. 1.1) connected to an external mains socket, preferably in store, (Fig. 1.2) for connecting 1 to 100 charging strips and a built-in data transmission device, preferably a router, and a battery bank enabling station operation after disconnecting power supply. The portable charging station with the batteries allows bidirectional connection with a server application, receiving and transmitting data with the server 24/7. After connecting the external power supply, it is supplied to the displays via charging strips sending and receiving data between each other and between the displays mounted on the shopping trolleys. After connecting the portable charging station to the power source, the batteries in the charging station are automatically charged. Preferably, the portable charging station has wheels for easy handling. The portable charging station allows charging displays mounted on the shopping trolleys anywhere in store. The only condition is to provide access to the mains socket. The portable charging station has a built-in meter.for metering the current drawn from the store infrastructure to determine consumption level and costs of the entire infrastructure within the store.
**II. Portable charging strip** (Fig. 2) - comprises a plug (Fig. 2.1) connected to the charging station socket (Fig. 1.2). Its narrow and elongated enclosure (Fig. 2) has 1 to 100 plugs, preferably magnetic (Fig. 2.2), which are connectable to the displays. The strip supplies current for display charging and allows bidirectional data transfer between the portable charging station and the display. During data transmission, the strip can be placed anywhere, preferably on the shopping trolley, for easy connection of the strip plugs to the display sockets, preferably mounted on the shopping trolley. The portable charging strip is part of the portable infrastructure for managing multimedia displays.
**III. Portable=multimedia display** (Fig. 3) is a device integrated with a single enclosure, preferably displaying multimedia content. Built-in batteries provide independent power supply system. During the store/market/hypermarket opening hours, the portable multimedia display is moved around the store and displays multimedia content to the customer. Preferably, after the store opening hours, the portable multimedia display is connected to the portable charging station via the charging strip for charging, downloading data including software updates and uploading system and marketing data via wired or wireless connection.

To ensure correct system operation and battery charging, the portable charging station must be connected with the plug (Fig. 1.1) to the socket (power source) in store. The portable charging station is connected with the portable charging strip via the socket in the portable charging station (Fig. 1.2) and the plug in the portable charging strip (Fig. 2.1). The charging strip is connected, preferably with a magnetic connector with the display mounted on the shopping trolley, comprising a plug in the portable charging strip (Fig. 2.2) and a socket in the display mounted on the shopping trolley (Fig. 3). The order the system components are connected to each other is arbitrary, and when connected, the charging and data transfer commence. Fig. 4 shows the procedure. In other embodiment, the display batteries are charged by connecting the portable charging station with the charging plug directly to the display, without the charging strip.

A portable induction strip can be used without any connectors between the portable charging strip and the display, where the charging process is inductive.

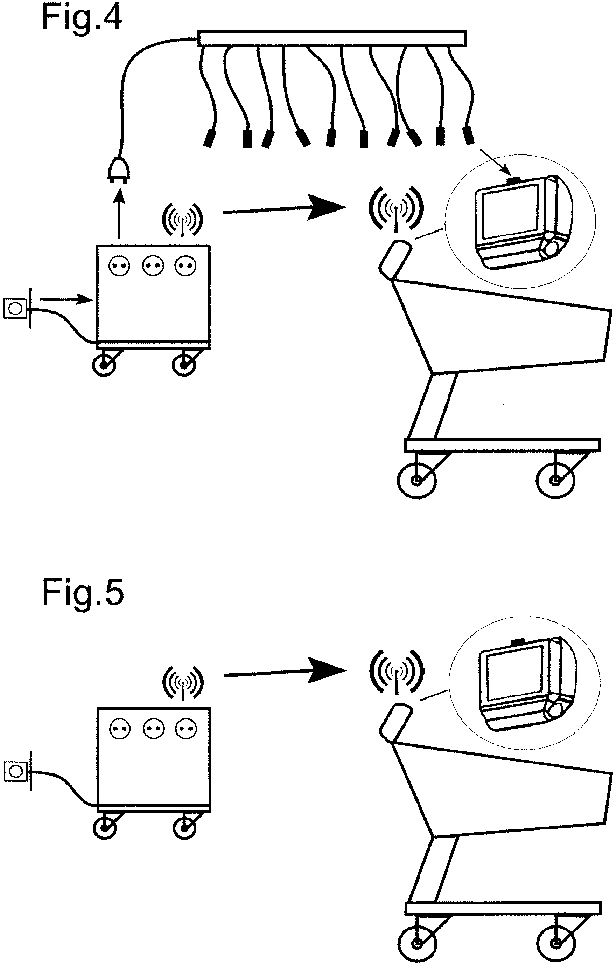

Data and multimedia content transfer may be wireless, independent of the charging strip, directly to the displays mounted on the shopping trolleys with built-in data transmission modules using GSM, Wi-Fi or other transmission systems (Fig. 5).

Using the portable management system for multimedia displays solves multiple problems:
Eliminate costly repair and construction works, electrical and technical works required when installing the system, building permits and other legal approvals.

Flexible allocation of data transmission and display charging location.

Easy replacement of faulty system component or repairs without disassembly.

No interference with in-store IT systems.

No additional store space for the charging station required.

No contact of the third party and store customers with the charging station components, e.g. no risk of electric shock.

Quick system implementation in any environment.

Easy transfer of any or all system components to other facilities depending on current demand.

Flexible system scaling depending on current demand by adding or removing selected system components.

Improved system logistics and flexibility by without any need for charging and/or data transmission space.

No fixed connection between system infrastructure components and the store infrastructure. All system infrastructure components are movable and maintain full functionality at any location.

The portable management system for multimedia displays is connected to the mains socket in store, when connecting the portable charging station with the mains socket for charging the display batteries.

## Claims

1. A management system for multimedia displays comprising a charger, a module for transmitting data and multimedia content to the multimedia displays mounted on the shopping trolleys used in retail networks/stores/markets/hypermarkets, **characterized in that** it comprises a portable charging station, preferably with wheels, further comprising a charger, a data transmission router, preferably GSM modem, which plugged into the mains socket and connected to the portable multimedia displays via a portable charging strip, charges the batteries of the multimedia display and transmits data and multimedia content to said multimedia display.

2. The system according to claim 1, **characterized in that** the portable charging station comprises 1 to 100 sockets for connecting the portable charging strips.

3. The system according to claim 1, **characterized in that** the portable charging station comprises a battery bank enabling operation of said station after cutting off the power supply.

4. The system according to claim 1, **characterized in that** the portable charging station comprises the battery bank automatically charged after connecting the portable charging station to the power supply.

5. The system according to claim 1, **characterized in that** the portable charging station allows bidirectional communication with the server application for sending and receiving data.

6. The system according to claim 1, **characterized in that** the portable charging station connects to the portable multimedia displays wirelessly.

7. The system according to claim 1, **characterized in that** the portable charging station comprises a built-in meter for metering the current drawn from the store infrastructure.

8. The system according to claim 1, **characterized in that** the portable charging strip comprises a plug connected to the charging station socket.

9. The system according to claim 1, **characterized in that** the portable charging station comprises 1 to 100 sockets for connecting displays.

10. The system according to claim 1, **characterized in that** the portable charging strip allows bidirectional data transfer between the portable charging station and the multimedia display.

11. The system according to claim 1, **characterized in that** the system is physically connected with the store infrastructure, only when connected to the portable charging station via a mains socket located in-store.

12. The management system according to claim 1, **characterized in that** the portable charging strip is preferably connected with the portable multimedia display via a magnetic connector.

13. The management system according to claim 1, **characterized in that** the order the system components are connected to each other is arbitrary.

14. The management system according to claim 1, **characterized in that** all the components are modular and can be interchanged and replaced.
